# EUROPEAN PATENT SPECIFICATION

(11) **EP 1 326 901 B1**
(45) Date of publication and mention of the grant of the patent: **08.06.2005**
(21) Application number: 01984647.6
(22) Date of filing: 06.09.2001
(51) Int. Cl.: C08F 20/12, C08F 2/48

(54) **ACYLPHOSPHINE OXIDE PHOTOINITIATORS IN METHACRYLATE CASTING RESINS**
ACYLPHOSPHINOXID-PHOTOINITIATOREN IN METHACRYLAT-GIESSHARZEN
PHOTO-INITIATEURS A L'OXYDE D'ACYLPHOSPHINE DANS DES RESINES DE COULEE AU METHACRYLATE

(30) Priority: 14.09.2000 EP 00810826
(43) Date of publication of application: 16.07.2003
(73) Proprietor: Ciba Specialty Chemicals Holding Inc., 4057 Basel (CH)
(72) Inventor: RINKER, Karsten, 79594 Inzlingen (DE); AUSCHRA, Clemens, 79106 Freiburg (DE); JUNG, Tunja, 79618 Rheinfelden-Herten (DE); JAHN, Reiner, 79379 Müllheim (DE); LITZLER, André, F-68720 Spechbach-le-Bas (FR)
(86) International application number: PCT/EP2001/010284
(87) International publication number: WO 2002/022697

(56) References cited:
- WO-A-97/27223
- WO-A-99/60427

## Description

The invention relates to a process for the production of mouldings from special methacrylate casting resin formulations, to the methacrylate casting resin formulations and to the mouldings obtained from the process.

EP 006 972 describes the photopolymerisation of (meth)acrylates with UV light in the presence of azo compounds, wherein control of the thermal conditions is imperative and the polymerisation takes place slowly.
Methacrylates are generally less reactive than acrylate systems from the standpoint of photopolymerisation. For that reason, in the field of radiation-curable surface-coatings and printing inks it is generally acrylate systems that have gained prominence (acrylate-functionalised monomers, crosslinking agents, oligomers). Particularly since the introduction of acylphosphine oxide photoinitiators it has been possible also for thick-layered and pigmented acrylate systems and especially systems based on unsaturated polyester/styrene to be cured via photopolymerisation. This is described in a large number of publications, for example in US 4 710 523 and US 5 767 169.
It is known that for specific relatively thin-layered applications (< 1 mm), the less reactive methacrylate systems are also suitable for radiation curing. For example, EP 436 205 discloses the adhesive bonding of acrylic glass plates with e.g. methacrylate mixtures which comprise primarily methyl methacrylate (MMA) and photoinitiators of the benzophenone, benzoin or α-hydroxyketone type by means of UV light. More recently EP 548 740 has described that such adhesives can be formulated with monoacylphosphine oxides to form daylight-curable systems.

There is a need in the art for an effective and economical way of also curing thick-layered methacrylate formulations.

It has now been found that under certain conditions it is also possible to fully harden thick-layered formulations of methacrylates very quickly by photopolymerisation to form mechanically usable mouldings.

The invention relates to a photopolymerisation process for the production of mouldings from methacrylate casting resins wherein
(1) a methacrylate casting resin formulation containing
   (A1) > 50% methyl methacrylate and/or a prepolymerisate containing a high proportion of methyl methacrylate
   (A2) 0 to 40% other monomers that can be copolymerised with methyl methacrylate
   (B) 0.1 to 10% at least one mono- or bis-acylphosphine oxide photoinitiator
   (C) 0 to 10% other photoinitiators
   (D) 0 to 5% thermal initiators and
   (E) optionally further customary additives is cast in a mould and
(2) is fully cured by irradiation with a light source in the range of from 200 to 800 nm to form a mechanically stable moulding.

The distinguishing feature is that the methacrylate casting resin formulation comprises a mono- or bis-acylphosphine oxide photoinitiator.

The methacrylate casting resin formulation comprises as component (A1) for example one or a mixture of the following constituents:
- as polymerisable constituent: methyl methacrylate (MMA)
- as prepolymerisate (PP): polymethyl methacrylate (PMMA) or copolymers of methyl methacrylate with subordinate amounts, for example up to a maximum of 40% based on the prepolymerisate, of a comonomer (M), for example esters of acrylic acid with alcohols having from 1 to 18 carbon atoms, e.g. methyl acrylate, butyl acrylate, etc., derivatives of meth-acrylic acid, for example of formula (II 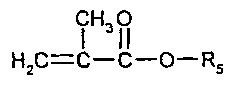 , wherein R₅ is C₁-C₂₂alkyl, C₅-C₁₂cycloalkyl, phenyl, naphthyl or benzyl. (Definitions of C₁-C₁₈alkyl and C₅-C₁₂cycloalkyl are given hereinbelow under the description of component (B)).
   Further examples of (M) are acrylic acid, methacrylic acid, styrene, (C₁-C₄alkyl)-substituted styrenes, α-methylstyrene, maleic anhydride, maleic acid, fumaric acid, itaconic acid, functional monomers based on esters of acrylic acid or methacrylic acid with functionalised alcohols, e.g. 2-hydroxyethyl acrylate, 2-hydroxyethyl methacrylate, 2-hydroxypropyl methacrylate, 2-ethoxyethyl methacrylate, 2-dimethylaminoethyl acrylate, 2-dimethylaminoethyl methacrylate, N-tert-butylaminoethyl methacrylate, amides of acrylic acid and methacrylic acid, e.g. acrylamide, methacrylamide, N-(C₁-C₄alkyl)-substituted acrylamides and methacrylamides, e.g. dimethylacrylamide, dimethylaminoethylmethacrylamide and 2-acrylamido-2-methylpropanesulfonic acid.
   Also suitable are, for example, copolymers of methyl methacrylate and acrylates, methyl methacrylate advantageously constituting the major proportion of the copolymer, for example more than 95%, for example from 95% to 99.9%, and the content of, for example, polyfunctional acrylates being about from 0.1 to 5%.
   As crosslinking monomers (M) there come into consideration especially polyfunctional methacrylic monomers or polyfunctional acrylic monomers. As crosslinking components there may be used bifunctional or trifunctional methacrylic monomers and also higher functional, e.g. tetrafunctional, methacrylic monomers. They are preferably ester-functional. Suitable polyfunctional methacrylic acid esters or acrylic acid esters are derived from aliphatic polyhydroxy compounds having at least 2, preferably at least 3 and especially at least 4, hydroxy groups and preferably from 2 to 6 carbon atoms. Examples are ethylene glycol, propylene glycol, 1,4-butanediol, 1,6-hexanediol, diethylene glycol, triethylene glycol, glycerol, trimethylolpropane, pentaerythritol, tetramethylolethane, sorbitan or alkoxylated polyhydric alcohols, e.g. ethoxylated trimethylolpropane and polyethylene glycol. Examples of suitable esters are: glycol dimethacrylate, butanediol dimethacrylate, dimethylolpropane dimethacrylate, diethylene glycol dimethacrylate, divinylbenzene, trimethylolpropane trimethacrylate, glycerol trimethacrylate, pentaerythritol tetramethacrylate, 1,2,3,4-butanetetraol tetramethacrylate, tetramethylolethane tetramethacrylate, 2,2-dihydroxypropanediol 1,3-tetramethacrylate, sorbitan tetramethacrylate, sorbitan pentamethacrylate and sorbitan hexamethacrylate.
   It is also possible to use mixtures of crosslinking monomers with from two to four or more ethylenically unsaturated, free-radical-polymerisable groups.
   The monomer (M) may also encompass the following crosslinking monomers known *per se*, e.g. monomers having free-radical-polymerisable vinyl groups in the molecule, for example allyl (meth)acrylate, triallyl cyanurate, divinylbenzene or diallyl phthalate.

Component (A1), i.e. the content of methyl methacrylate and/or of prepolymerisate containing a high proportion of methyl methacrylate, in the casting resin formulation is greater than 50%, e.g. from 50% to 99.9%, typically from 80% to 99.9%, preferably from 95% to 99.9%.

In addition to MMA, the methacrylate casting resin formulation may also comprise, as component (A2), further monomers, these being monomers copolymerisable with MMA, in amounts of from 0 to 40%. Examples of such copolymerisable monomers correspond to the components (M) described above as constituent of the prepolymerisate. The same mono- or poly-unsaturated monomers are encompassed:
Component A2 (corresponding to comonomer (M)) is selected from: esters of acrylic acid with alcohols having from 1 to 18 carbon atoms, e.g. methyl acrylate, butyl acrylate, etc., derivatives of methacrylic acid, for example of formula (II) 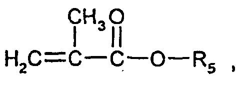 , wherein
R₅ is C₁-C₁₈alkyl, C₅-C₁₂cycloalkyl, phenyl, naphthyl or benzyl (definitions of C₁-C₁₈alkyl and
C₅-C₁₂cycloalkyl are given hereinbelow under the description of component (B)), acrylic acid, methacrylic acid, styrene, (C₁-C₄alkyl)-substituted styrenes, α-methylstyrene, maleic anhydride, maleic acid, fumaric acid, itaconic acid, functional monomers based on esters of acrylic acid or methacrylic acid with functionalised alcohols, e.g. 2-hydroxyethyl acrylate, 2-hydroxyethyl methacrylate, 2-hydroxypropyl methacrylate, 2-ethoxyethyl methacrylate, 2-dimethylaminoethyl acrylate, amides of acrylic acid and methacrylic acid, e.g. acrylamide, methacrylamide, N-(C₁-C₄alkyl)-substituted acrylamides and methacrylamides, e.g. dimethylacrylamide, dimethylaminoethylmethacrylamide and 2-acrylamido-2-methylpropanesulfonic acid.
Especially suitable are simple acrylates, e.g. methyl acrylate, ethyl acrylate, butyl acrylate, in amounts of from 0 to 5%, and also polyfunctional acrylates in amounts of from 0 to 5%.
As crosslinking monomers M there come into consideration especially also polyfunctional methacrylic monomers or polyfunctional acrylic monomers. As crosslinking components there may be used bifunctional or trifunctional methacrylic monomers and also higher functional, e.g. tetrafunctional, methacrylic monomers. They are preferably ester-functional. Suitable polyfunctional methacrylic acid esters or acrylic acid esters are derived from aliphatic polyhydroxy compounds having at least 2, preferably at least 3 and especially at least 4, hydroxy groups and preferably from 2 to 6 carbon atoms. Examples are ethylene glycol, propylene glycol, 1,4-butanediol, 1,6-hexanediol, diethylene glycol, triethylene glycol, glycerol, trimethylolpropane, pentaerythritol, tetramethylolethane, sorbitan or alkoxylated polyhydric alcohols, e.g. ethoxylated trimethylolpropane and polyethylene glycol. Examples of suitable esters are: glycol dimethacrylate, butanediol dimethacrylate, dimethylolpropane dimethacrylate, diethylene glycol dimethacrylate, divinylbenzene, trimethylolpropane trimethacrylate, glycerol trimethacrylate, pentaerythritol tetramethacrylate, 1,2,3,4-butanetetraol tetramethacrylate, tetramethylolethane tetramethacrylate, 2,2-dihydroxypropanediol 1,3-tetramethacrylate, sorbitan tetramethacrylate, sorbitan pentamethacrylate and sorbitan hexamethacrylate.
It is also possible to use mixtures of crosslinking monomers with from two to four or more ethylenically unsaturated, free-radical-polymerisable groups.
The monomer M may also encompass the following crosslinking monomers known *per se,* e.g. monomers having free-radical-polymerisable vinyl groups in the molecule, for example allyl (meth)acrylate, triallyl cyanurate, divinylbenzene or diallyl phthalate.
Component (A2), i.e. the content of comonomer copolymerisable with MMA, is from 0 to 40%, typically from 0 to 20% and preferably from 0 to 10%.

As photoinitiator component (B) there are used according to the invention monoacylphosphine oxides or bisacylphosphine oxides. Also possible are mixtures of such compounds, i.e. one or more monoacylphosphine oxides, one or more bisacylphosphine oxides or a mixture of one or more monoacylphosphine oxides and one or more bisacylphosphine oxides.

It is preferable to use bisacylphosphine oxides or a mixture of mono- and bis-acylphosphine oxides. Bisacylphosphine oxides are of special interest.

Suitable photoinitiator compounds as component (B) are, for example, compounds of formula I 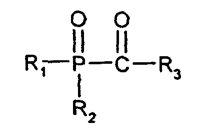 wherein R₁ is C₁-C₁₈alkyl, which is unsubstituted or substituted by phenyl, C₁-C₁₂alkylphenyl, halophenyl, C₁-C₁₂alkoxyphenyl, C₂-C₅alkoxycarbonyl, C₁-C₁₂alkoxy, CN or by halogen; or R₁ is C₂-C₁₈alkenyl or C₅-C₈cycloalkyl; or R₁ is phenyl, naphthyl, biphenylyl or a five- or six-membered O-, S- or N-containing heterocyclic radical, the radicals phenyl, naphthyl, biphenylyl and the heterocyclic radical being unsubstituted or substituted by C₁-C₁₂alkyl, C₁-C₁₂alkoxy and/or by halogen;
R₂ has one of the meanings given for R₁ or is a radical -(CO)R₃ or -OR₄; or
R₁ and R₂ together with the phosphorus atom to which they are bonded form a ring;
R₃ is C₁-C₁₈alkyl, which is unsubstituted or substituted by phenyl, C₂-C₅alkoxycarbonyl, C₁-C₁₂alkoxy, phenoxy, C₁-C₁₂alkylthio, phenylthio or by halogen; or R₃ is phenylvinyl or is C₅-C₈cycloalkyl unsubstituted or substituted by C₁-C₁₂alkyl, phenyl, phenoxy, C₁-C₁₂alkoxy, C₂-C₅alkoxycarbonyl, C₁-C₄alkylthio and/or by halogen; or R₃ is phenyl, naphthyl, biphenylyl or a five- or six-membered O-, S- or N-containing heterocyclic radical, the radicals phenyl, naphthyl, biphenylyl and the heterocyclic radical being unsubstituted or substituted by C₁-C₁₂alkyl, C₁-C₁₂alkoxy, C₁-C₁₂alkoxyalkyl, C₁-C₄alkylthio and/or by halogen; and
R₄ is C₁-C₁₈alkyl, phenyl-C₁-C₄alkyl, C₅-C₈cycloalkyl, phenyl or naphthyl.

C₁-C₁₈Alkyl is linear or branched and is, for example, C₁-C₁₂-, C₁-C₈-, C₁-C₆- or C₁-C₄-alkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl, decyl, undecyl, dodecyl, tetradecyl, pentadecyl, hexadecyl, heptadecyl and octadecyl. For example, R₁ and R₂ are especially C₁-C₈alkyl, e.g. 2,4,4-trimethylpentyl.
C₁-C₁₂Alkyl is likewise linear or branched and has, for example, the meanings given above up to the appropriate number of carbon atoms.

C₁-C₁₂Alkoxy denotes linear or branched radicals and is, for example, C₁-C₁₀-, C₁-C₈-, C₁-C₆- or C₁-C₄-alkoxy. Examples are methoxy, ethoxy, propoxy, isopropoxy, n-butyloxy, sec-butyloxy, isobutyloxy, tert-butyloxy, pentyloxy, hexyloxy, heptyloxy, 2,4,4-trimethyl-pentyloxy, 2-ethylhexyloxy, octyloxy, nonyloxy, decyloxy and dodecyloxy, especially methoxy, ethoxy, propoxy, isopropoxy, n-butyloxy, sec-butyloxy, isobutyloxy and tert-butyloxy, preferably methoxy. C₁-C₁₂Alkylthio denotes linear or branched radicals and is, for example, C₁-C₈-, C₁-C₆- or C₁-C₄-alkylthio. Examples are methylthio, ethylthio, propylthio, isopropylthio, n-butylthio, sec-butylthio, isobutylthio, tert-butylthio, pentylthio, hexylthio, heptylthio, 2,4,4-trimethyl-pentylthio, 2-ethylhexylthio, octylthio, nonylthio, decylthio and dodecylthio, especially methylthio, ethylthio, propylthio, isopropylthio, n-butylthio, sec-butylthio, isobutylthio and tert-butylthio, preferably methylthio.

C₅-C₁₂- and C₅-C₈-cycloalkyl denote linear or branched alkyl that contains at least one ring, e.g. cyclopentyl, methyl-cyclopentyl, cyclohexyl, methyl- or dimethyl-cyclohexyl, cyclooctyl or cyclononyl, especially cyclopentyl and cyclohexyl.

C₂-C₁₂Alkoxyalkyl denotes alkyl substituted by an alkoxy group, i.e. it is C₂-C₁₂alkyl interrupted by an O atom. Examples are methoxymethyl, methoxyethyl, methoxypropyl, ethoxymethyl, ethoxyethyl, ethoxypropyl, propoxymethyl, propoxyethyl and propoxypropyl.

Phenyl-C₁-C₄alkyl is e.g. benzyl, phenylethyl, α-methylbenzyl, phenylbutyl, phenylpropyl or α,α-dimethylbenzyl, especially benzyl. Phenyl-C₁-C₂alkyl is preferred.

C₂-C₁₈Alkenyl radicals may be mono- or poly-unsaturated and linear or branched and are, for example, C₂-C₁₂-, C₂-C₁₀-, C₂-C₈-, C₂-C₆- or C₂-C₄-alkenyl. Examples are vinyl, allyl, methallyl, 1,1-dimethylallyl, 1-butenyl, 2-butenyl, 1,3-pentadienyl, 1-hexenyl, 1-octenyl, decenyl and dodecenyl, especially allyl.

Substituted phenyl is mono- to penta-substituted, e.g. mono-, di- or tri-substituted, especially di- or tri-substituted, at the phenyl ring.
Preferred substituents for R₁, R₂ and R₃ as phenyl or naphthyl are C₁-C₄alkyl, especially methyl, C₁-C₄alkoxy, especially methoxy, and chlorine. Special preference is given to e.g. 2,4,6-trimethylphenyl, 2,6-dichlorophenyl, 2,6-dimethylphenyl and 2,6-dimethoxyphenyl.

C₁-C₁₂Alkylphenyl is phenyl substituted by C₁-C₁₂alkyl and is, for example, tolyl, xylyl, mesityl, ethylphenyl or diethylphenyl, preferably tolyl or mesityl.

C₁-C₁₂Alkoxyphenyl is phenyl substituted by C₁-C₁₂alkoxy and is, for example, methoxyphenyl, dimethoxyphenyl, triethoxyphenyl, ethoxyphenyl or diethoxyphenyl, preferably methoxyphenyl.
C₂-C₅Alkoxycarbonyl denotes a carbonyl group substituted by C₁-C₄alkoxy, i.e. C₁-C₄alkoxy-(CO)-. Examples are methoxycarbonyl, ethoxycarbonyl, propoxycarbonyl, isopropoxycarbonyl, butoxycarbonyl, isobutoxycarbonyl and tert-butoxycarbonyl.

Halogen is fluorine, chlorine, bromine and iodine, especially chlorine and bromine, preferably chlorine.

As an O-, S- or N-containing 5- or 6-membered heterocyclic ring, R₁, R₂ and R₃ are e.g. furyl, thienyl, pyrrolyl, oxinyl, dioxinyl or pyridyl. The mentioned heterocyclic radicals can be mono- or poly-substituted, for example mono- or di-substituted. Examples thereof are dimethylpyridyl, dimethylpyrrolyl and methylfuryl.

When R₁ and R₂ together with the phosphorus atom to which they are bonded form a ring, that ring may also be, for example, a bridged ring. For example the following structures may be formed 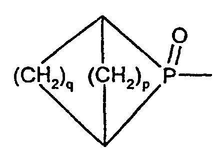 wherein p = 1 to 8 and q = 2 or 3.

In the context of this Application the term "and/or" is intended to express that not only one of the defined alternatives (substituents) may be present but that also a plurality of different alternatives (substituents) of those defined may be present at the same time, that is to say mixtures of different alternatives (substituents).
The term "at least" is intended to mean one or more than one, e.g. one or two or three, preferably one or two.
In the description and in the patent claims, the word "containing" is to be understood as meaning that, unless expressly described to the contrary, a defined subject or a defined group of subjects are included but it does not exclude any other substances not explicitly mentioned.

R₁ and R₂ need not be identical.

When R₂ is a radical -(CO)R₃, the radical R₃ in that radical need not be identical with the other radical R₃ positioned at the carbonyl group in formula I.

The compounds of formula I are known and their preparation is frequently described in the literature, for example in US 4 710 523 and US 5 767 169. Many of the compounds of formula I are commercially available.

Special mention should be made of compounds of formula I wherein
R₁ is C₁-C₁₂alkyl, which is unsubstituted or substituted by phenyl, C₁-C₁₂alkoxy or by halogen; or R₁ is C₂-C₁₈alkenyl or C₅-C₈cycloalkyl; or R₁ is phenyl, which is unsubstituted or substituted by C₁-C₁₂alkyl, C₁-C₁₂alkoxy and/or by halogen;
R₂ has one of the meanings given for R₁ or is a radical -(CO)R₃ or -OR₄;
R₃ is C₁-C₁₈alkyl, which is unsubstituted or substituted by phenyl, C₁-C₁₂alkoxy, phenoxy or by halogen; or R₃ is C₅-C₈cycloalkyl; or R₃ is phenyl, which is unsubstituted or substituted by C₁-C₁₂alkyl, C₁-C₁₂alkoxy and/or by halogen; and
R₄ is C₁-C₁₈alkyl.

Special preference is given to those compounds of formula I wherein R₁ and R₂ are identical.

Interesting compounds of formula I are those wherein R₂ is the radical -(CO)R₃.

Also preferred are the compounds of formula I wherein R₂ is the radical -(CO)R₃ and R₁ is phenyl or is phenyl substituted as defined above.

Examples of suitable compounds of formula I are
bis(2,6-dimethoxybenzoyl)-2,4,4-trimethylpentylphosphine oxide;
bis(2,4,6-trimethylbenzoyl)phenyl-phosphine oxide;
bis(2,4,6-trimethylbenzoyl)-2,4-dipentyloxyphenyl-phosphine oxide;
2,4,6-trimethylbenzoyl-diphenyl-phosphine oxide;
2,4,6-trimethylbenzoyl-phenyl-phosphinic acid ethyl ester.

The invention relates also to a process wherein as component (B) there is used bis(2,4,6-trimethylbenzoyl)phenylphosphine oxide and/or 2,4,6-trimethylbenzoyl-diphenylphosphine oxide.

Component (B) is advantageously present in the methacrylate casting resin formulation in an amount of from 0.1 to 10%, e.g. from 0.1 to 5% or from 0.5 to 5%, especially from 0.5 to 3%.

It will be understood that the phosphine oxide photoinitiators can also be used in combination with photoinitiators of other chemical classes. Examples of suitable other photoinitiator compounds are those described as component (C).

As component (C) there come into consideration, for example, camphorquinone, benzophenone, benzophenone derivatives, e.g. 2,4,6-trimethylbenzophenone, 2-methylbenzophenone, 3-methylbenzophenone, 4-methylbenzophenone, 4,4'-dimethylbenzophenone, 4,4'-bis(chloromethyl)benzophenone, 4-chlorobenzophenone, 4-phenylbenzophenone, 3,3'-dimethyl-4-methoxy-benzophenone, [4-(4-methylphenylthio)phenyl]-phenylmethanone, methyl-2-benzoyl benzoate, acetophenone, acetophenone derivatives, for example α-hydroxycycloalkylphenyl ketones or 2-hydroxy-2-methyl-1-phenyl-propanone, dialkoxyacetophenones, α-hydroxy- or α-amino-acetophenones, e.g. (4-methylthiobenzoyl)-1-methyl-1-morpholino-ethane, (4-morpholino-benzoyl)-1-benzyl-1-dimethylamino-propane, 4-aroyl-1,3-dioxolanes, benzoin alkyl ethers and benzil ketals, e.g. benzil dimethyl ketal, phenylglyoxalates and derivatives thereof, e.g. phenylglyoxalic acid methyl ester, dimeric phenylglyoxalates, peresters, e.g. benzophenonetetracarboxylic acid peresters, for example as described in EP 126 541, trisacylphosphine oxides, halomethyltriazines, e.g. 2-[2-(4-methoxy-phenyl)-vinyl]-4,6-bis-trichloromethyl-[1,3,5]triazine, 2-(4-methoxy-phenyl)-4,6-bis-trichloromethyl-[1,3,5]triazine, 2-(3,4-dimethoxy-phenyl)-4,6-bis-trichloromethyl-[1,3,5]triazine, 2-methyl-4,6-bis-trichloromethyl-[1,3,5]triazine, hexaarylbisimidazole I coinitiator systems, e.g. ortho-chlorohexaphenyl-bisimidazole in combination with 2-mercaptobenzothiazole; ferrocenium compounds or titanocenes, for example dicyclopentadienyl-bis(2,6-difluoro-3-pyrrolo-phenyl)titanium. As coinitiators it is also possible to use, for example, borate compounds.

Of special interest is the use as component (C) of α-hydroxyketones, α-aminoketones, benzil dimethyl ketal, benzophenones, substituted benzophenones, benzoins and phenylglyoxalic acid esters.
The invention accordingly relates also to a process wherein there is used as additional photoinitiator (C) at least one compound selected from the group of α-hydroxyketones, α-aminoketones, benzil dimethyl ketal, benzophenone, substituted benzophenones, benzoins and phenylglyoxalic acid esters.

Especially suitable for use in the process according to the invention or in the methacrylate casting resin formulations according to the invention are combinations of bis(2,6-dimethoxybenzoyl)-2,4,4-trimethylpentylphosphine oxide and 2-hydroxy-2-methyl-1-phenyl-propan-1-one in different mixing ratios, e.g. 5% : 95% or e.g. 25% : 75%; or for example bis(2,6-dimethoxybenzoyl)-2,4,4-trimethylpentylphosphine oxide and 1-hydroxy-cyclohexyl-phenyl-propan-1-one, e.g. in a mixing ratio of 25% : 75% or e.g. 50% : 50%; also suitable are mixtures of 2,4,6-bis(trimethylbenzoyl)phenylphosphine oxide, 1-hydroxy-cyclohexyl-phenyl-propan-1-one and benzophenone, the ratio of 1-hydroxy-cyclohexyl-phenyl-propan-1-one to benzophenone preferably being 1 : 1.
The various photoinitiators can be added to the formulation individually or in the form of easily handled liquid mixtures or solutions of the photoinitiators in the monomer or in a suitable solvent.
The combination of the monoacylphosphine oxide compound or bisacylphosphine oxide compound with an α-hydroxyketone may also be present, for example, in the form of a molecule complex. Such compounds and their preparation are disclosed, for example, in US 5 942 290.

The content of component (C) in the methacrylate casting resin formulation is advantageously from 0 to 10%, e.g. from 0.1 to 10%, from 0 to 5%, from 0.1 to 5%.

Thermal initiators suitable for the process according to the invention are generally the compounds customary in the art and known to the person skilled in the art. Examples of such compounds are peroxide compounds, peroxides, for example hydrogen peroxide or benzoyl peroxide, aliphatic diacyl peroxides, hydroperoxides, e.g. tert-butyl hydroperoxide, peroxy acids, peroxy esters, percarbonates or peroxydisulfates, e.g. sodium, potassium or ammonium peroxydisulfate. Further examples of thermal initiators are azo compounds, such as azoisobutyronitrile (AIBN), 2,2'-azobis(2,4-dimethylvaleronitrile), or those described in US 2 471 959. Also suitable are nitrile-group-free azo initiators, for example those of formula (III) 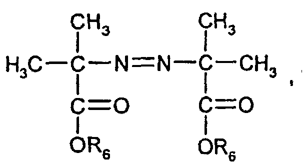 wherein R₆ is C₁-C₈alkyl, especially methyl or ethyl.

Also of interest as component (D) are hydroxyl-group-containing derivatives, for example di(2-hydroxyethyl)-2,2'-azo-bis-isobutyrate, di(2-hydroxypropyl)-2,2'-azo-bis-isobutyrate and azocumene compounds, for example 1,1'-azo-bis-4-methylcumene and 1,1'-azo-bis-4-iso-propylcumene.

The content of thermal initiators in the methacrylate casting resin formulation is advantageously from 0 to 5%, preferably from 0.01 to 2%, e.g. from 0.01 to 0.5%.

The invention accordingly relates also to a process wherein the methyl methacrylate casting resin formulation comprises as component (D) from 0.01 to 5%, especially from 0.01 to 2%, of a thermal initiator selected from the group of azo or peroxide compounds.

Furthermore, the methacrylate casting resin formulation may optionally, depending upon the intended use, comprise a plurality of additives (E) customary in the art.
These are especially dyes and/or pigments and fillers.
Pigments may be white or coloured. Depending upon the intended use, both inorganic and organic pigments may be used (cf., for example: G. Buxbaum in "Industrial Organic Pigments" and W. Herbst/K.Hunger in "Industrial Organic Pigments"). Such additives are known to the person skilled in the art; some examples are titanium dioxide pigments, e.g. of the rutile or anatase type, carbon black, zinc oxide, such as zinc white, iron oxides, such as iron oxide yellow, iron oxide red, chrome yellow, chrome green, nickel titanium yellow, ultramarine blue, cobalt blue, bismuth vanadate, cadmium yellow and cadmium red. Examples of organic pigments are mono- or bis-azo pigments, and also metal complexes thereof, phthalocyanine pigments, polycyclic pigments, e.g. perylene, anthraquinone, thioindigo, quinacridone or triphenylmethane pigments, and also diketo-pyrrolo-pyrrole, isoindolinone, e.g. tetrachloroisoindolinone, isoindoline, dioxazine, benzimidazolone and quinophthalone pigments. Also suitable are, for example, light- and heat-stabilised pigments.
The pigments can be used in the formulations on their own or in admixture.
Depending upon the intended use, the pigments are added to the formulations in amounts customary in the art, for example in an amount of from 1 to 60% by weight, or from 10 to 30% by weight, based on the total mass.
The formulations may also comprise, for example, organic dyes of an extremely wide variety of classes. Examples are azo dyes, methine dyes, anthraquinone dyes and metal complex dyes. Customary concentrations are, for example, from 0.1 to 20%, especially from 1 to 5%, based on the total mass.

In the formulation according to the invention the amount of dye or pigment is, for example, from 0.1 to 49.9%, especially from 0.1 to 25%, e.g. from 0.1 to 10%, it being possible for that amount simultaneously also to include fillers.
Examples of such fillers are the inorganic materials customary in casting resin technology, for example aluminium oxide, alkali metal and/or alkaline earth metal oxides, silicon dioxide and/or titanium dioxide in various modifications, clays, silicates, oxides, carbon, metals or metal alloys, synthetic materials such as ceramics, powdered glass, porcelain, slag or finely divided silicon dioxide, quartz, kaolin, talcum, mica, feldspar, apatite, barytes, gypsum, chalk, limestone, dolomite, glass fibres or mixtures of the mentioned components.
The pigments can also be incorporated into the casting resin formulation in the form of preformed dispersions with the aid of suitable pigment dispersants.

Further examples of additives (E) are opacifying agents, e.g. esters of linear long-chain alkanoic acids, thermal inhibitors, which are intended to prevent premature polymerisation, e.g. hydroquinone, hydroquinone derivatives, p-methoxyphenol, β-naphthol or sterically hindered phenols, e.g. 2,6-di(tert-butyl)-p-cresol. In order to increase dark storage stability it is possible to use, for example, copper compounds, such as copper naphthenate, stearate or octoate, phosphorus compounds, e.g. triphenylphosphine, tributylphosphine, triethyl phosphite, triphenyl phosphite or tribenzyl phosphite, quaternary ammonium compounds, e.g. tetramethylammonium chloride or trimethylbenzylammonium chloride, or hydroxylamine derivatives, e.g. N-diethylhydroxylamine. For the purpose of excluding atmospheric oxygen during the polymerisation it is possible to add paraffin or similar wax-like substances which, being insoluble in the polymer, migrate to the surface at the beginning of the polymerisation and form a transparent surface layer which prevents air from entering. Equally possible is the application of a layer that is impermeable to oxygen.
Also of interest as additional additives (E) are especially light stabilisers, e.g. UV absorbers, e.g. those of the hydroxyphenylbenzotriazole, hydroxyphenylbenzophenone, oxalic acid amide or hydroxyphenyl-s-triazine type. Such compounds can be used on their own or in the form of mixtures, with or without the use of sterically hindered amines (HALS).

Examples of such UV absorbers and light stabilisers are
1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxy-carbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazol-2-yl phenol]; transesterification product of 2-[3'-tert-butyl-5'-(2-methoxycarbonylethyl)-2'-hydroxyphenyl]benzotriazole with polyethylene glycol 300; [R-CH₂CH₂-COO(CH₂)₃]₂- where R = 3'-tert-butyl-4'-hydroxy-5'-2H-benzotriazol-2-yl phenyl.
2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
3. Esters of unsubstituted or substituted benzoic acids, for example 4-tert-butyl-phenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate and 2-methyl-4,6-di-tert-butylphenyl 3,5-di-tert-butyl-4-hydroxybenzoate.
4. Acrylates, for example ethyl and isooctyl α-cyano-β,β-diphenylacrylate, methyl α-carbomethoxycinnamate, methyl and butyl α-cyano-β-methyl-p-methoxycinnamate, methyl α-carbomethoxy-p-methoxycinnamate and N-(β-carbomethoxy-β-cyanovinyl)-2-methylindoline.
5. Sterically hindered amines, for example bis(2,2,6,6-tetramethylpiperidyl) sebacate, bis(2,2,6,6-tetramethylpiperidyl) succinate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the product of the condensation of 1-hydroxyethyl-2,2,6,6-tetramethyl-4-hydroxypiperidine and succinic acid, the product of the condensation of N,N'-bis(2,2,6,6-tetramethyl-4-piperidyl)-hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl)1,2,3,4-butane-tetraoate, 1,1'-(1,2-ethanediyl)bis-(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethyl-piperidyl) 2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl) sebacate, bis(1-octyloxy-2,2,6,6-tetramethylpiperidyl) succinate, the product of the condensation of N,N'-bis(2,2,6,6-tetramethyl-4-piperidyl)hexamethylene-diamine and 4-morpholino-2,6-dichloro-1,3,5-triazine, the product of the condensation of 2-chloro-4,6-di(4-n-butylamino-2,2,6,6-tetramethylpiperidyl)1,3,5-triazine and 1,2-bis(3-aminopropylamino)ethane, the product of the condensation of 2-chloro-4,6-di(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione and 3-dodecyl-1-(1,2,2,6,6-pentamethyl-4-piperidyl)pyrrolidine-2,5-dione.
6. Oxalic acid diamides, for example 4,4'-dioctyloxyoxanilide, 2,2'-diethoxyoxanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyl-oxanilide and mixtures thereof with 2-ethoxy-2'-ethyl-5,4'-di-tert-butyloxanilide, and mixtures of o- and p-methoxy- and of o- and p-ethoxy-disubstituted oxanilides.
7. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,5-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4-dimethylphenyl)-1,3,5-triazine, 2-[2-hydroxy-4-(2-hydroxy-3-octyloxy-propyloxy)phenyl]-4,6-bis(2,4-dimethylphenyl)-1,3,5-triazine and 2-[4-dodecyl/tridecyloxy(2-hydroxypropyl)oxy-2-hydroxyphenyl]-4,6-bis(2,4-dimethylphenyl)-1,3,5-triazine.
8. Phosphites and phosphonites, for example triphenyl phosphite, diphenyl alkylphosphites, phenyl dialkylphosphites, tris(nonylphenyl) phosphite, trilauryl phosphite, trioctadecyl phosphite, distearyl pentaerythritol diphosphite, tris(2,4-di-tert-butylphenyl) phosphite, diisodecylpentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy-pentaerythritol diphosphite, bis(2,4-di-tert-butyl-6-methylphenyl) pentaerythritol diphosphite, bis(2,4,6-tri-tert-butylphenyl) pentaerythritol diphosphite, tristearylsorbitol triphosphite, tetrakis-(2,4-di-tert-butylphenyl)-4,4'-biphenylenediphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl) methylphosphite and bis(2,4-di-tert-butyl-6-methylphenyl) ethylphosphite.
Examples are also "Krypto-UVA", as are described, for example, in EP 180 548. It is also possible to use latent UVA, as described, for example, by Hida *et al*. in RadTech Asia 97, 1997, page 212.
The amount of UV absorbers and/or light stabilisers is advantageously about from 0.05 to 3%.

It is also possible - depending upon the intended use - to use additives customary in the art, such as antistatics, flow improvers, optical brighteners, wetting agents, mould release agents and/or adhesion promoters.

In order to accelerate the photopolymerisation it is possible to add as further additives (E) amines, e.g. triethanolamine, N-methyl-diethanolamine, p-dimethylaminobenzoic acid ethyl ester, Michler's ketone or other alkylamino-substituted benzophenone derivatives. The action of the amines can be enhanced by the addition of aromatic ketones of the benzophenone type. Amines suitable for use as oxygen capture agents are, for example, substituted N,N-dialkylanilines, as described in EP 339 841. Further accelerators, co-initiators and auto-oxidisers are thiols, thioethers, disulfides and phosphines, as described e.g. in EP 438 123 and GB 2 180 358.
It is also possible to add to the compositions according to the invention chain transfer reagents customary in the art. Examples are mercaptans, amines and benzothiazole.

Photopolymerisation can also be accelerated by the addition as further additives (E) of photosensitisers that shift or broaden the spectral sensitivity. These include especially aromatic carbonyl compounds, e.g. benzophenone, thioxanthone, especially isopropyl-thioxanthone, anthraquinone and 3-acylcoumarin derivatives, terphenyls, styryl ketones, and also 3-(aroylmethylene)-thiazolines, camphorquinone, and also eosin, rhodamine and erythrosine dyes. Also to be regarded as photosensitisers are, for example, the amines indicated above.

The choice of the additives (E) is governed by the field of use in question and the properties desired for that field. The additives (E) described above are customary in the art and are accordingly used in amounts customary in the art.

The invention relates also to a process wherein the methacrylate casting resin mixture comprises as additional additives (E) from 0.1 to 49.9%, especially from 0.1 to 25%, of a dye, pigment and/or filler.

The methacrylate casting resin formulation used in the process according to the invention is prepared in a manner known *per se* in accordance with methods customary in the art by mixing components (A1) and (B) and, as appropriate, (A2), (C), (D) and/or (E).

The invention relates also to a methacrylate casting resin formulation containing
(A1) > 50% methyl methacrylate and/or a prepolymerisate containing a high proportion of methyl methacrylate
(A2) 0 to 40% other monomers that can be copolymerised with methyl methacrylate
(B) 0.1 - 10% at least one mono- or bis-acylphosphine oxide photoinitiator
(C) 0 - 10% other photoinitiators
(D) 0 - 5% thermal initiators and optionally further customary additives (E).

The formulation is then introduced into a mould, that is to say a polymerisation chamber of customary construction, such a chamber being especially a flat chamber in the form of a casting mould, e.g. two plates (for example of silicate glass) which are sealed in a pressure-resistant manner, for example with a profiled cord. Such moulds can be used to produce plates of a wide variety of thicknesses, e.g. in a thickness of more than 1 mm or more than 3 mm, preferably more than 5 mm, for example in a thickness of from 1 to 30 mm or from 1 to 10 mm.
The surface formats of the moulds may generally be as desired and depend upon the exposure system available and the static property of the cured plate. Examples are approximately from 100 mm to 2000 mm in length and from 50 mm to 2000 mm in width.
The moulds should advantageously be sufficiently transparent to allow irradiation with light in order to initiate the photopolymerisation. The process according to the invention is not limited to use in planar moulds, however; it would also be quite possible to use, for example, a polymerisation chamber having a lenticular or some other shape (e.g. for the manufacture of optical lenses from acrylic glass).
The process commonly used for the preparation of materials of acrylic glass is, for example, a casting process as described above in glass chambers, e.g. as also described in EP 450 478, EP 519 362, EP 699 690 and EP 716 100. The production of acrylic glass can be carried out also by means of a double-band apparatus as described in EP 292 738, in which a liquid monomer mixture, or "syrup", which contains already partly polymerised prepolymerisate in dissolved form, is poured between glass plates and polymerised.

Preference is given to the process according to the invention wherein the average thickness of the casting mould is greater than 1 mm, especially greater than 3 mm

Preferably a transparent mould is used.

The polymerisation is carried out by exposure to light in a wavelength range of approximately from 200 to 800 nm. Suitable radiation is present, for example, in sunlight or light from artificial light sources. Accordingly a large number of the most varied kinds of light source may be used. Both point sources and planiform radiation sources (lamp carpets) are suitable. The radiation source chosen in each particular case is advantageously determined by the mould used. When planar formats are being irradiated it will be understood that planiform radiation sources are more advantageous than point sources. Examples are: carbon arc lamps, xenon arc lamps, medium pressure, super high pressure, high pressure and low pressure mercury arc radiators doped, where appropriate, with metal halides (metal halide lamps), microwave-excited metal vapour lamps, excimer lamps, superactinic fluorescent tubes, fluorescent lamps, argon incandescent lamps, flash lamps, photographic floodlight lamps, light-emitting diodes (LED), electron beams and X-rays. The distance between the lamp and the substrate to be exposed may vary according to the intended use and the type and strength of the lamp and may be, for example, from 2 cm to 150 cm.

The polymerisation chamber may be irradiated from one side - in which case the chamber is rotated several times during the exposure - or from several sides simultaneously.

The polymerisation process described can, of course, be further optimised using various further known technical variations, such as the possibility of carrying out the irradiation on a conveyor belt or with the chambers oriented vertically or horizontally. For example, it would also be possible for the radiation intensity to be controlled (lamps, distance between object and lamp) in dependence upon the heat of polymerisation, mass temperature or reaction time. In addition to controlling the radiation intensity, the polymerisation can also be controlled by the use of cut-off filters for separating the light spectrum.

The exposure is advantageously carried out at room temperature (about from 20 to 25°C). If required, heating can also be carried out during the exposure, for example to temperatures of below 100°C, preferably below 75°C, especially below 50°C, e.g. from 30 to 100°C, from 30 to 75°C or from 30 to 50°C.
The invention accordingly relates also to a process wherein the photopolymerisation is carried out at temperatures of below 100°C, especially below 75°C.

The heating is effected as described hereinbelow, e.g. by means of infrared light, ovens or by means of temperature-controlled water baths.

The exposure time for solidifying the moulding, that is to say for polymerising the liquid methacrylate casting resin formulation, is generally less than 5 hours, e.g. less than 3 hours, especially less than 1.5 hours, for example from 0.5 to 5 hours, from 0.5 to 3 hours, e.g. from 1 to 3 hours.
The invention accordingly relates also to a process wherein the exposure (2) is carried out over a period of less than 5 h, especially less than 3 h.

In certain cases it may be advantageous after the exposure step (2) to add a heating step (3) for reducing the residual monomer content or for post-crosslinking the moulding, especially by heating to temperatures of more than about 100°C, the moulding being heated, for example, by being placed in a hot-air oven or autoclave, immersed in a water bath or irradiated with infrared light.
The moulding is heated to a temperature of, for example, from 50 to 150°C, from 80 to 130°C, especially from 100 to 120°C. During or after the heating, exposure can be continued. The additional heat treatment step, with or without irradiation, can take e.g. from 0.1 to 3 h, typically from 0.1 to 1 h.

The invention relates also to a process wherein (3) after the irradiation step (2) the methacrylate casting resin formulation is heated in the mould to a temperature of above 100°C, with or without irradiation.

The invention relates also to a moulding, especially in the form of a plate, cured by the process described above.

An important application for this new process is the production of acrylic glass plates in thicknesses of typically > 3 mm and < 50 mm.
Acrylic glass as a transparent, coloured or filled material consists mainly of polymerised MMA (methyl methacrylate) and may contain various amounts (typically from 0 to 40%) of various comonomers, e.g. C₁-C₄alkyl (meth)acrylates, (meth)acrylic acid, functionalised (meth)acrylates, styrene, crosslinker monomers, and also various further auxiliaries as described above.
The process according to the invention can therefore also be used in the production of glazing materials, e.g. also aircraft glazing material as described in EP 716 100. The process according to the invention can also be used in the production of coloured/filled or colourless plates, e.g. for noise-insulation walls, furniture elements, e.g. table tops, facing elements, sanitary fitting elements, etc..

The following Examples further illustrate the invention. Unless otherwise indicated, parts and percentages in the Examples, as well as in the rest of the description and in the patent claims, relate to weight.

### Example 1:

A mixture of
0.8 part bis(2,4,6-trimethylbenzoyl)phenylphosphine oxide,
0.055 part AIBN and
99.1945 parts methyl methacrylate
is introduced, as customary for cast acrylic glass, into a silicate glass chamber having a spacing of 6 mm. The mixture is pregelled in an oven at 60°C for 2 h and then, perpendicularly to the surface of the chamber, exposed under a fluorescent lamp for 30 min and polymerised (until a hard-plastic state is reached). Every 5 minutes the chamber is turned through 180° perpendicularly to the direction of irradiation in order to achieve homogeneous polymerisation. The polymerisate is released after cooling at a temperature of about 10°C ± 5°C. The lower the temperature, the easier it is to separate the polymerisate from the mould. A transparent bubble-free cured plate is obtained. The pendulum hardness of the cured specimen is determined according to König (DIN 53157). The results are given in Table 1.

### Example 2:

A mixture as described in Example 1 is introduced, as customary for cast acrylic glass, into a silicate glass chamber having a spacing of 6 mm. The polymerisation is initiated perpendicularly to the surface of the chamber under a fluorescent lamp for 10 minutes and pregelation is carried out in an oven at 60°C for 1 hour, followed by polymerisation perpendicularly to the surface of the chamber under a fluorescent lamp for 10 minutes (until a hard-plastic state is reached). Every 5 minutes the chamber is turned through 180° perpendicularly to the direction of irradiation in order to achieve homogeneous polymerisation. The polymerisate is released after cooling at a temperature of about 10°C ± 5°C. The lower the temperature, the easier it is to separate the polymerisate from the mould. A transparent bubble-free cured plate is obtained. The pendulum hardness of the cured specimen is determined according to König (DIN 53157). The results are given in Table 1.

### Example 3:

A mixture of
0.8 part bis(2,4,6-trimethylbenzoyl)phenylphosphine oxide and
99.2 parts methyl methacrylate
is introduced, as customary for cast acrylic glass, into a silicate glass chamber having a spacing of 6 mm. The polymerisation is carried out perpendicularly to the surface of the chamber under a fluorescent lamp for 30 min (until a hard-plastic state is reached). Every 5 minutes the chamber is turned through 180° perpendicularly to the direction of irradiation in order to achieve homogeneous polymerisation. The polymerisate is released after cooling at a temperature of about 10°C ± 5°C. The lower the temperature, the easier it is to separate the polymerisate from the mould. A transparent bubble-free cured plate is obtained. The pendulum hardness of the cured specimen is determined according to König (DIN 53157). The results are given in Table 1.

### Example 4

A mixture of
0.8 part 2,4,6-trimethylbenzoyldiphenylphosphine oxide and
99.2 parts methyl methacrylate
is introduced into a silicate glass chamber having a spacing of 6 mm. The polymerisation is initiated perpendicularly to the surface of the chamber under a fluorescent lamp for 10 minutes and the specimen is then heated in an oven at 60°C for 1 hour, followed by exposure perpendicularly to the surface of the chamber under a fluorescent lamp for 30 minutes. Every 5 minutes the chamber is turned through 180° perpendicularly to the direction of irradiation in order to achieve homogeneous polymerisation. The polymerisate is released after cooling at a temperature of about 10°C ± 5°C. The lower the temperature, the easier it is to separate the polymerisate from the mould. A transparent bubble-free cured plate is obtained. The pendulum hardness of the cured specimen is determined according to König (DIN 53157). The results are given in Table 1.

**Table 1**

| Polymerisation process | Example 1 | Example 2 | Example 3 |
|---|---|---|---|
| Heat (60°C) | 120 min | - | - |
| Exposure | 30 min | 10 min | 30 min |
| Heat (60°C) | - | 60 min | - |
| Exposure | - | 10 min | - |
| Pendelum hardness [sec] | 95-100 | 105-112 | 95-100 |

Examples 1-4 show that defect-free fully hardened plates can be produced by photopolymerisation in the presence of acylphosphine oxides in a comparatively short polymerisation time.

## Claims

1. A photopolymerisation process for the production of mouldings from methacrylate casting resins wherein
(1) a methacrylate casting resin formulation containing
(A1) > 50% methyl methacrylate and/or a prepolymerisate containing a high proportion of methyl methacrylate
(A2) 0 to 40% other monomers that can be copolymerised with methyl methacrylate
(B) 0.1 to 10% at least one mono- or bis-acylphosphine oxide photoinitiator
(C) 0 to 10% other photoinitiators
(D) 0 to 5% thermal initiators and
(E) optionally further customary additives
is cast in a mould and
(2) is fully cured by irradiation with a light source in the range of from 200 to 800 nm to form a mechanically stable moulding.

2. A process according to claim 1, wherein the average thickness of the casting mould is greater than 1 mm, especially greater than 3 mm.

3. A process according to claim 1, wherein the photopolymerisation is carried out at temperatures of below 100°C, especially below 75°C.

4. A process according to claim 1, wherein the methyl methacrylate casting resin formulation comprises as component (D) from 0.01 to 5%, especially from 0.01 to 2%, of a thermal initiator selected from the group of azo or peroxide compounds.

5. A process according to claim 1, wherein (3) after the irradiation step (2) the methacrylate casting resin formulation is heated in the mould to a temperature of above 100°C, with or without irradiation.

6. A process according to claim 1, wherein the exposure (2) is carried out over a period of less than 5 h, especially less than 3 h.

7. A process according to claim 1, wherein the methacrylate casting resin mixture comprises as additional additives (E) from 0.1 to 49.9%, especially from 0.1 to 25%, of a dye, pigment and/or filler.

8. A process according to any one of claims 1 to 7, wherein as component (B) there is used a compound of formula I 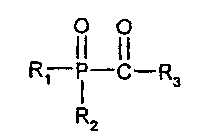 wherein
R₁ is C₁-C₁₈alkyl, which is unsubstituted or substituted by phenyl, C₁-C₁₂alkylphenyl, halophenyl, C₁-C₁₂alkoxyphenyl, C₂-C₅alkoxycarbonyl, C₁-C₁₂alkoxy, CN or by halogen; or R₁ is C₂-C₁₈alkenyl or C₅-C₈cycloalkyl; or R₁ is phenyl, naphthyl, biphenylyl or a five- or six-membered O-, S- or N-containing heterocyclic radical, the radicals phenyl, naphthyl, biphenylyl and the heterocyclic radical being unsubstituted or substituted by C₁-C₁₂alkyl, C₁-C₁₂alkoxy and/or by halogen;
R₂ has one of the meanings given for R₁ or is a radical -(CO)R₃ or -OR₄; or
R₁ and R₂ together with the phosphorus atom to which they are bonded form a ring;
R₃ is C₁-C₁₈alkyl, which is unsubstituted or substituted by phenyl, C₂-C₅alkoxycarbonyl, C₁-C₁₂alkoxy, phenoxy, C₁-C₁₂alkylthio, phenylthio or by halogen; or R₃ is phenylvinyl or is C₅-C₈cycloalkyl unsubstituted or substituted by C₁-C₁₂alkyl, phenyl, phenoxy, C₁-C₁₂alkoxy, C₂-C₅alkoxycarbonyl, C₁-C₄alkylthio and/or by halogen; or R₃ is phenyl, naphthyl, biphenylyl or a five- or six-membered O-, S- or N-containing heterocyclic radical, the radicals phenyl, naphthyl, biphenylyl and the heterocyclic radical being unsubstituted or substituted by C₁-C₁₂alkyl, C₁-C₁₂alkoxy, C₁-C₁₂alkoxyalkyl, C₁-C₄alkylthio and/or by halogen; and
R₄ is C₁-C₁₈alkyl, phenyl-C₁-C₄alkyl, C₅-C₈cycloalkyl, phenyl or naphthyl.

9. A process according to claim 8, wherein as component (B) there is used bis(2,4,6-trimethylbenzoyl)phenylphosphine oxide and/or 2,4,6-trimethylbenzoyl-diphenylphosphine oxide.

10. A process according to any one of claims 1 to 9, wherein there is used as additional photoinitiator (C) at least one compound selected from the group of α-hydroxyketones, α-aminoketones, benzil dimethyl ketal, benzophenone, substituted benzophenones, benzoins and phenylglyoxalic acid esters.

11. A methacrylate casting resin formulation containing
(A1) > 50% methyl methacrylate and/or a prepolymerisate containing a high proportion of methyl methacrylate
(A2) 0 to 40% other monomers that can be copolymerised with methyl methacrylate
(B) 0.1 to 10% at least one mono- or bis-acylphosphine oxide photoinitiator
(C) 0 to 10% other photoinitiators
(D) 0 to 5% thermal initiators and
optionally further customary additives (E).

12. A cured moulding, obtained by a process according to claim 1.

## Patentansprüche

1. Photopolymerisationsverfahren zur Herstellung von Formkörpern aus Methacrylatgiessharzen worin
(1) eine Methacrylatgiessharzformulierung enthaltend
(A1) > 50 % Methylmethacrylat und/oder ein methylmethacrylatreiches Präpolymerisat
(A2) 0 bis 40% sonstige Monomere, die mit Methylmethacrylat copolymerisiert werden können
(B) 0.1 bis 10 % mindestens eines Mono- oder Bisacylphosphinoxidphotoinitiators
(C) 0 bis 10 % sonstige Photoinitiatoren
(D) 0 bis 5 % thermische Initiatoren und
(E) gegebenenfalls weitere übliche Additive,
in eine Form gegossen wird und
(2) durch Bestrahlen mit einer Lichtquelle im Bereich 200 bis 800 nm zu einem mechanisch stabilen Formkörper ausgehärtet wird.

2. Verfahren nach Anspruch 1, worin die durchschnittliche Dicke der Giessform grösser als 1 mm, insbesondere grösser als 3 mm, ist.

3. Verfahren nach Anspruch 1, worin die Photopolymerisation bei Temperaturen von unter 100°C, insbesondere unter 75°C, durchgeführt wird.

4. Verfahren nach Anspruch 1, worin die Methylmethacrylatgiessharzformulierung als Komponente (D) 0.01 - 5 %, insbesondere 0.01 - 2 %, eines thermischen Initiators ausgewählt aus der Gruppe der Azo- oder Peroxidverbindungen, enthält.

5. Verfahren nach Anspruch 1, worin (3) nach dem Bestrahlungsschritt (2) die Methacrylatgiessharzformulierung in der Form auf eine Temperatur von oberhalb 100°C erwärmt wird, mit oder ohne Bestrahlung.

6. Verfahren nach Anspruch 1, worin die Belichtung (2) während einer Zeit von weniger als 5 h, insbesondere weniger als 3 h, durchgeführt wird.

7. Verfahren nach Anspruch 1, worin die Metharylatgiessharzmischung als zusätzliche Additive (E) 0.1 - 49.9 %, insbesondere 0.1 - 25 % eines Farbstoffes, Pigmentes oder/und Füllstoffes enthält.

8. Verfahren nach einem der Ansprüche 1-7, worin als Komponente (B) eine Verbindung der Formel I verwendet wird 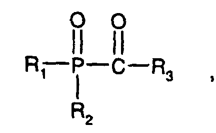 worin
**R**₁ C₁-C₁₈-Alkyl, welches unsubstituiert oder mit Phenyl, C₁-C₁₂-Alkylphenyl, Halogenphenyl, C₁-C₁₂-Alkoxyphenyl, C₂-C₅-Alkoxycarbonyl, C₁-C₁₂-Alkoxy, CN oder Halogen substituiert ist bedeutet; oder R₁ C₂-C₁₈-Alkenyl oder C₅-C₈-Cycloalkyl ist; oder R₁ Phenyl, Naphthyl, Biphenylyl oder einen fünf- oder sechsgliedrigen O-, S- oder N-haltigen heterozyklischen Rest steht, wobei die Reste Phenyl, Naphthyl, Biphenylyl oder heterozyklischer Rest unsubstituiert oder mit C₁-C₁₂-Alkyl, C₁-C₁₂-Alkoxy oder/und Halogen substituiert sind; bedeutet;
**R**₂ eine der für R₁ gegebenen Bedeutungen hat oder für einen Rest -(CO)R₃ oder -OR₄ steht; oder
R₁ und R₂ zusammen mit dem Phosphoratom, an welches sie gebunden sind, einen Ring bilden;
**R**₃ C₁-C₁₈-Alkyl, welches unsubstituiert oder mit Phenyl, C₂-C₅-Alkoxycarbonyl, C₁-C₁₂-Alkoxy, Phenoxy, C₁-C₁₂-Alkylthio, Phenylthio oder Halogen substituiert ist bedeutet; oder R₃ Phenylvinyl oder unsubstituiertes oder mit C₁-C₁₂-Alkyl, Phenyl, Phenoxy, C₁-C₁₂-Alkoxy, C₂-C₅-Alkoxycarbonyl, C₁-C₄-Alkylthio oder/und Halogen substituiertes C₅-C₈-Cycloalkyl darstellt; oder R₃ Phenyl, Naphthyl, Biphenylyl oder einen fünf- oder sechsgliedrigen O-, S- oder N-haltigen heterozyklischen Rest steht, wobei die Reste Phenyl, Naphthyl, Biphenylyl oder heterozyklischer Rest unsubstituiert oder mit C₁-C₁₂-Alkyl, C₁-C₁₂-Alkoxy, C₁-C₁₂-Alkoxyalkyl, C₁-C₄-Alkylthio oder/und Halogen substituiert sind; bedeutet; und
**R**₄ C₁-C₁₈-Alkyl, Phenyl-C₁-C₄-Alkyl, C₅-C₈-Cycloalkyl, Phenyl oder Naphthyl darstellt.

9. Verfahren nach Anspruch 8, worin als Komponente (B) Bis(2,4,6-trimethylbenzoyl)-phenylphosphinoxid oder/und 2,4,6-Trimethylbenzoyl-diphenylphosphinoxid verwendet wird.

10. Verfahren nach einem der Ansprüche 1-9, worin als zusätzlicher Photoinitiator (C) mindestens eine Verbindung ausgewählt aus der Gruppe der α-Hydroxyketone, α-Aminoketone, Benzildimethylketal, Benzophenon, substituierten Benzophenone, Benzoine, Phenylglyoxalsäureester verwendet wird.

11. Methacrylatgiessharzformulierung enthaltend
(A1) > 50 % Methylmethacrylat und/oder ein methylmethacrylatreiches Präpolymerisat
(A2) 0 bis 40% sonstige Monomere, die mit Methylmethacrylat copolymerisiert werden können
(B) 0,1 -10 % mindestens eines Mono- oder Bisacylphosphinoxid-Photoinitiators
(C) 0 - 10 % sonstige Photoinitiatoren
(D) 0 - 5 % thermische Initiatoren und
gegebenenfalls weitere übliche Additive (E).

12. Gehärteter Formkörper, erhalten durch ein Verfahren nach Anspruch 1.

## Revendications

1. Procédé de photopolymérisation pour la production d'articles moulés à partir de résines de méthacrylate à couler dans lequel :
(1) une formulation de résines de méthacrylate à couler contenant :
(A1) plus de 50% de méthacrylate de méthyle et/ou d'un prépolymérisat contenant une grande proportion de méthacrylate de méthyle
(A2) 0% à 40% d'autres monomères qui sont capables de copolymériser avec le méthacrylate de méthyle
(B) 0,1% à 10% d'au moins un photoamorceur d'oxyde de mono- ou de bis-acylphosphine
(C) 0% à 10% d'autres photoamorceurs
(D) 0% à 5% d'amorceurs thermiques et
(E) éventuellement d'autres additifs courants est coulée dans un moule et
(2) est complètement durcie par irradiation avec une source lumineuse dans la gamme de 200 à 800 nm, pour former un article moulé stable sur le plan mécanique.

2. Procédé selon la revendication 1, dans lequel l'épaisseur moyenne du moule de coulée est supérieure à 1 mm, en particulier supérieure à 3 mm.

3. Procédé selon la revendication 1, dans lequel la photopolymérisation est réalisée à des températures inférieures à 100°C, en particulier inférieures à 75°C.

4. Procédé selon la revendication 1, dans lequel la formulation de résines de méthacrylate de méthyle à couler comprend, en tant que composant (D), 0,01% à 5%, en particulier 0,01% à 2% d'un amorceur thermique choisi dans le groupe formé par les composés azoïques ou peroxyde.

5. Procédé selon la revendication 1, dans lequel (3), après l'étape d'irradiation (2), la formulation de résines de méthacrylate à couler est chauffée dans le moule à une température supérieure à 100°C, avec ou sans irradiation.

6. Procédé selon la revendication 1, dans lequel l'exposition (2) est réalisée pendant une durée inférieure à 5 heures, en particulier inférieure à 3 heures.

7. Procédé selon la revendication 1, dans lequel le mélange de résines de méthacrylate à couler comprend, en tant qu'additifs supplémentaires (E), 0,1% à 49,9%, en particulier 0,1% à 25% d'un colorant, d'un pigment et/ou d'une charge.

8. Procédé selon l'une quelconque des revendications 1 à 7, dans lequel est utilisé, en tant que composant (B), un composé de formule I 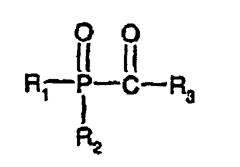 où :
- R₁ représente un groupe alkyle en C₁ à C₁₈ qui est non substitué ou substitué par un groupe phényle, alkyl(en C₁ à C₁₂)phényle, halogénophényle, alcoxy(en C₁ à C₁₂)phényle, alcoxy(en C₂ à C₅)carbonyle, alcoxyle en C₁ à C₁₂, CN ou un atome d'halogène ; ou R₁ représente un groupe alcényle en C₂ à C₁₈ ou cycloalkyle en C₅ à C₈ ; ou R₁ représente un groupe phényle, naphtyle, biphénylyle ou un radical hétérocyclique à cinq ou six éléments contenant O, S ou N, les radicaux phényle, naphtyle, biphénylyle et le radical hétérocyclique étant non substitués ou substitués par un groupe alkyle en C₁ à C₁₂, alcoxyle en C₁ à C₁₂ et/ou un atome d'halogène ;
- R₂ a l'une des significations données pour R₁ ou représente un radical -(CO)R₃ ou -OR₄ ; ou
- R₁ et R₂ forment, avec l'atome de phosphore auquel ils sont liés, un cycle ;
- R₃ représente un groupe alkyle en C₁ à C₁₈ qui est non substitué ou substitué par un groupe phényle, alcoxy(en C₂ à C₅)carbonyle, alcoxyle en C₁ à C₁₂, phénoxy, alkyl(en C₁ à C₁₂)thio, phénylthio ou un atome d'halogène ; ou R₃ représente un groupe phénylvinyle ou un groupe cycloalkyle en C₅ à C₈ non substitué ou substitué par un groupe alkyle en C₁ à C₁₂, phényle, phénoxy, alcoxyle en C₁ à C₁₂, alcoxy(en C₂ à C₅)carbonyle, alkyl(en C₁ à C₄)thio et/ou un atome d'halogène ; ou R₃ représente un groupe phényle, naphtyle, biphénylyle ou un radical hétérocyclique à cinq ou six éléments contenant O, S ou N, les radicaux phényle, naphtyle, biphénylyle et le radical hétérocyclique étant non substitués ou substitués par un groupe alkyle en C₁ à C₁₂, alcoxyle en C₁ à C₁₂, alcoxyalkyle en C₁ à C₁₂, alkyl(en C₁ à C₄)thio et/ou un atome d'halogène ; et
- R₄ représente un groupe alkyle en C₁ à C₁₈, phénylalkyle(en C₁ à C₄), cycloalkyle en C₅ à C₈, phényle ou naphtyle.

9. Procédé selon la revendication 8, dans lequel est utilisé, en tant que composant (B), l'oxyde de bis(2,4,6-triméthylbenzoyl)phénylphosphine et/ou l'oxyde de 2,4,6-triméthylbenzoyldiphénylphosphine.

10. Procédé selon l'une quelconque des revendications 1 à 9, dans lequel est utilisé, en tant que photoamorceur supplémentaire (C), au moins un composé choisi dans le groupe formé par les α-hydroxycétones, les α-aminocétones, le diméthylcétal de benzyle, la benzophénone, les benzophénones substituées, les benzoïnes et les esters de l'acide phénylglyoxalique.

11. Formulation de résines de méthacrylate à couler contenant :
(A1) plus de 50% de méthacrylate de méthyle et/ou d'un prépolymérisat contenant une grande proportion de méthacrylate de méthyle
(A2) 0% à 40% d'autres monomères qui sont capables de copolymériser avec le méthacrylate de méthyle
(B) 0,1% à 10% d'au moins un photoamorceur d'oxyde de mono- ou de bis-acylphosphine
(C) 0% à 10% d'autres photoamorceurs
(D) 0% à 5% d'amorceurs thermiques
et éventuellement d'autres additifs courants (E).

12. Article moulé durci obtenu au moyen d'un procédé selon la revendication 1.
